Europäisches Patentamt

European Patent Office

Office européen des brevets

(19)

(11) Veröffentlichungsnummer: **0 386 284**
**A1**

## (12) EUROPÄISCHE PATENTANMELDUNG

(21) Anmeldenummer: 89103992.7

(22) Anmeldetag: 07.03.89

(51) Int. Cl.5: **B01D 53/36, B01J 37/00**

(43) Veröffentlichungstag der Anmeldung:
12.09.90 Patentblatt 90/37

(84) Benannte Vertragsstaaten:
**DE ES GR**

(71) Anmelder: **DIDIER-WERKE AG**
**Lessingstrasse 16-18**
**D-6200 Wiesbaden(DE)**

(72) Erfinder: **Kainer, Hartmut, Dr.**
**Am Güldenplan 2G**
**D-6200 Wiesbaden-12(DE)**
Erfinder: **Wirth, Ludwig**
**Hans-Böckler-Strasse 76**
**D-6200 Wiesbaden(DE)**
Erfinder: **Brückner, Raimund**
**Lessingstrasse 16-18**
**D-6200 Wiesbaden(DE)**

(74) Vertreter: **Brückner, Raimund Dipl.-Ing.**
**Lessingstrasse 16-18**
**D-6200 Wiesbaden(DE)**

(54) Verfahren zum Beschichten eines Katalysatorträgers.

(57) Bei einem Verfahren zum Beschichten eines Katalysatorträgers mit Katalysatormaterial soll die Herstellung und der Einbau in einen Reaktor vereinfacht sein. Es wird hierfür zunächst der unbeschichtete Katalysatorträger in den Reaktor eingebaut. Das Katalysatormaterial wird in feinverteilter Körnung einem Trägerfluid, beispielsweise dem Reaktionsgas selbst, beigemischt. Danach wird das Trägerfluid durch den Reaktor geleitet, so daß sich Katalysatormaterial auf dem Katalysatorträger niederschlägt. Das niedergeschlagene Katalysatormaterial wird verfestigt.

EP 0 386 284 A1

## Verfahren zum Beschichten eines Katalysatorträgers

Die Erfindung betrifft ein Verfahren zum Beschichten eines Katalysatorträgers mit katalytisch aktivem Katalysatormaterial, insbesondere zur Reduzierung von $NO_x$, für einen Reaktor zur Behandlung eines Reaktionsgases, insbesondere Rauchgases.

In der DE-OS 33 46 360 ist ein Verfahren zum Befestigen eines Reaktionsbeschleunigers an einem Trägerkörper beschrieben. Dabei wird der Trägerkörper magnetisiert oder elektrostatisch aufgeladen, wodurch der Reaktionsbeschleuniger zum Haften gebracht wird. Damit soll eine Befestigung erreicht werden, durch die das Katalysatormaterial seine Eigenschaften nicht ändert. Das Verfahren ist nur in Sonderfällen einsetzbar. Insbesondere erfordert es aufwendige und leistungsstarke elektrotechnische Einrichtungen, die in den betreffenden Herstellungsstätten nicht ohne weiteres zur Verfügung stehen. Auch ist die Haftung meist schwach und die erreichbare Schichtdicken sind gering. In der Praxis konnte sich dieses Verfahren bisher nicht durchsetzen.

Nach dem Stand der Technik der Praxis werden die Katalysatorträger vor dem Einbau in den Reaktor mit Katalysatormaterial beschichtet. Solche vorgefertigten Katalysatorplatten werden in Rahmen oder Kästen eingesetzt. Die so hergestellten Module werden danach in den Reaktor eingestellt. Die Schlag- und Stoßempfindlichkeit der beschichteten Katalysatorträger führt zu einer erheblichen Bruchgefahr. Außerdem bilden im Reaktor die Rahmen oder Träger katalytisch inaktive Teile, so daß das Volumen des Reaktors nicht optimal mit Katalysatormaterial besetzt ist.

Aufgabe der Erfindung ist es, ein Verfahren der eingangs genannten Art anzugeben, mit dem die Herstellung des Katalysators, bestehend aus Katalysatorträger und Katalysatormaterial, und dessen Einbau in den Reaktor vereinfacht ist.

Erfindungsgemäß ist obige Aufgabe bei einem Verfahren der eingangs genannten Art dadurch gelöst, daß zunächst der unbeschichtete Katalysatorträger in den Reaktor eingebaut und das Katalysatormaterial in feinverteilter Körnung einem Trägerfluid durch den Reaktor geleitet wird, wobei sich Katalysatormaterial auf dem Katalysatorträger niederschlägt, und daß das an dem Katalysatorträger niedergeschlagene Katalysatormaterial verfestigt ist.

Der Katalysatorträger ist beim Einbau in den Reaktor noch nicht beschichtet. Er ist also unempfindlich gegen Stoß oder Schlag. Außerdem läßt er sich gegebenenfalls durch Biegen leicht an die Form des Reaktors anpassen. Im übrigen ist der unbeschichtete Katalysatorträger auch leichter als ein beschichteter Katalysatorträger.

Erst im Reaktor selbst wird das Katalysatormaterial an dem Katalysatorträger angelagert und verfestigt. Dabei lagert sich das Katalysatormaterial auch an solchen Teilen ab, die gegebenenfalls als Gerüst des Katalysatorträgers dienen. Durch die Anlagerung des Katalysatormaterials mittels des Trägerfluids wird eine gewünschte Verteilung des Katalysatormaterials über das Volumen des Reaktors erreicht. In Weiterbildung der Erfindung wird das Katalysatormaterial in einem Gasstrom als Trägerfluid staubförmig oder in einem Flüssigkeitsnebel als Trägerfluid durch den Reaktor geleitet. Als Trägerfluid könnte jedoch auch eine Flüssigkeit eingesetzt werden.

Vorzugsweise wird als Trägerfluid das zu behandelnde Reaktionsgas selbst verwendet. Es erübrigt sich dabei ein Einführen eines anderen Trägerfluids.

Wird das das Katalysatormaterial enthaltende Trägerfluid unter den Betriebsbedingungen, insbesondere Strömungsbedingungen, des zu behandelnden Reaktionsgases durch den Reaktor geleitet, dann ist erreicht, daß die Verteilung des Niederschlags des Katalysatormaterials den bei der späteren Behandlung des Reaktionsgases im Reaktor auftretenden Strömungen entspricht. In Zonen, die bei der Behandlung des Reaktionsgases von diesem stärker beströmt werden, ergibt sich von vornherein ein intensiverer Niederschlag des Katalysatormaterials. In solchen Zonen, die in einem Strömungsschatten liegen, schlägt sich entsprechend weniger Katalysatormaterial nieder.

Ein Bindemittel, das der Verfestigung des niedergeschlagenen Katalysatormaterials dient, kann nach, vor oder gleichzeitig mit dem das Katalysatormaterial enthaltenden Trägerfluid durch den Reaktor geleitet werden. Wird das Bindemittel nach dem Niederschlagen des Katalysatormaterials eingebracht, dann kann das niedergeschlagene Katalysatormaterial bis dahin magnetisch oder elektrostatisch an dem Katalysatorträger gehalten werden.

Um eine der Verteilung des Katalysatormaterials im Reaktor entsprechende Verteilung des Bindemittels zu erreichen, wird dieses in feinverteilter Form unter den Betriebsbedingungen, insbesondere Strömungsbedingungen, des Reaktionsgases mittels eines Trägergases oder eines Flüssigkeitsnebels auf das Katalysatormaterial bzw. den Katalysatorträger aufgebracht.

Das Bindemittel kann auch von Bestandteilen des Reaktionsgases selbst gebildet werden.

Ist das Katalysatormaterial verbraucht und soll der Katalysatorträger erneut beschichtet werden, dann wird in Ausgestaltung der Erfindung unbrauchbar gewordenes Katalysatormaterial durch ein Lösungsfluid und/oder mechanische Erschütterungen und gegebenenfalls ein magnetisches oder elektrostatisches Feld vom Katalysatorträger gelöst und abgetragen. Danach wird in der beschriebenen Weise frisches oder aufbereitetes Katalysatormaterial an dem Katalysatorträger niedergeschlagen.

Einige Verfahrensbeispiele werden im folgenden beschrieben:

In den Reaktor wird der Katalysatorträger, der von Metalldrähten oder Streckmetall gebildet ist, eingebaut.

Das Katalysatormaterial weist als Hauptbestandteil $Fe_2O_3.FeO$ auf. Dieses wird dem zu behandelnden Rauchgasstrom feinverteilt beigemischt und mit diesem durch den Reaktor geleitet. Als Bindemittel wirkt in dem Rauchgas enthaltendes $SO_2$ oder $SO_3$.

Es kann jedoch auch ein $H_2SO_4$-haltiges Bindemittel verwendet werden.

Auch durch eine Taupunktserniedrigung läßt sich aus dem Reaktionsgas ein als Bindemittel wirkender $H_2SO_4$-haltiger Niederschlag auf dem Katalysatorträger oder dem bereits auf diesem niedergeschlagenen Katalysatormaterial erreichen.

Bei einem weiteren Ausführungsbeispiel wird das Katalysatormaterial nach dem Verfestigen zusätzlich aktiviert. Hierfür kann ein Gas, wie $SO_2$, $SO_3$, CO oder eine Flüssigkeit, wie eine Chrom-Eisen-Lösung oder eine Chrom-Kupfer-Lösung, verwendet werden.

**Ansprüche**

1. Verfahren zum Beschichten eines Katalysatorträgers mit katalytisch aktivem Katalysatormaterial, insbesondere zur Reduzierung von $NO_x$, für einen Reaktor zur Behandlung eines Reaktionsgases, insbesondere Rauchgases, dadurch gekennzeichnet, daß zunächst der unbeschichtete Katalysatorträger in den Reaktor eingebaut und das Katalysatormaterial in feinverteilter Körnung einem Trägerfluid beigemischt wird, daß danach das Trägerfluid durch den Reaktor geleitet wird, wobei sich Katalysatormaterial auf dem Katalysatorträger niederschlägt, und daß das an dem Katalysatorträger niedergeschlagene Katalysatormaterial verfestigt wird.

2. Verfahren nach Anspruch 1, dadurch gekennzeichnet, daß das Katalysatormaterial in einem Gasstrom als Trägerfluid staubförmig oder in einem Flüssigkeitsnebel als Trägerfluid durch den Reaktor geleitet wird.

3. Verfahren nach Anspruch 1, dadurch gekennzeichnet, daß als Trägerfluid das zu behandelnde Reaktionsgas selbst verwendet wird.

4. Verfahren nach einem der vorhergehenden Ansprüche, dadurch gekennzeichnet, daß das das Katalysatormaterial enthaltende Trägerfluid unter den Betriebsbedingungen, insbesondere Strömungsbedingungen, des zu behandelnden Reaktionsgases durch den Reaktor geleitet wird.

5. Verfahren nach einem der vorhergehenden Ansprüche, dadurch gekennzeichnet, daß nach dem Niederschlagen des Katalysatormaterials am Katalysatorträger ein Bindemittel zur Verfestigung des Katalysatormaterials durch den Reaktor geleitet wird.

6. Verfahren nach Anspruch 5, dadurch gekennzeichnet, daß das Katalysatormaterial magnetisch oder eltrostatisch am Katalysatorträger gehalten ist.

7. Verfahren nach einem der vorhergehenden Ansprüche 1 bis 4, dadurch gekennzeichnet, daß vor dem Niederschlagen des Katalysatormaterials an dem Katalysatorträger ein Bindemittel zum Be- und Verfestigen des Katalysatormaterials durch den Reaktor geleitet wird.

8. Verfahren nach einem der vorhergehenden Ansprüche 1 bis 4, dadurch gekennzeichnet, daß dem Trägerfluid ein Bindemittel beigemischt wird, wobei dieses gleichzeitig mit dem Katalysatormaterial auf den Katalysatorträger aufgebracht wird.

9. Verfahren nach einem der vorhergehenden Ansprüche, dadurch gekennzeichnet, daß das Bindemittel in feinverteilter Form unter den Betriebsbedingungen, insbesondere Strömungsbedingungen, des zu behandelnden Reaktionsgases mittels eines Trägergases oder eines Flüssigkeitsnebels auf das Katalysatormaterial bzw. dem Katalysatorträger aufgebracht wird.

10. Verfahren nach einem der vorhergehenden Ansprüche, dadurch gekennzeichnet, daß das Katalysatormaterial als Hauptbestandteil $Fe_2O_3$. FeO enthält und das Bindemittel $H_2SO_4$-haltig ist.

11. Verfahren nach einem der vorhergehenden Ansprüche, dadurch gekennzeichnet, daß Bestandteile des Reaktionsgases das Bindemittel bilden.

12. Verfahren nach Anspruch 11, dadurch gekennzeichnet, daß das Katalysatormaterial als Hauptbestandteil $Fe_2O_3$ FeO enthält und das Bindemittel in dem Reaktionsgas enthaltenes $SO_2$ oder $SO_3$ ist.

13. Verfahren nach einem der vorhergehenden Ansprüche, dadurch gekennzeichnet, daß das niedergeschlagene und verfestigte Katalysatormaterial mittels eines Gases, wie $SO_2$, $SO_3$, CO oder einer Flüssigkeit, wie Chrom-Eisen-Lösung oder Chrom-Kupfer-Lösung, zusätzlich aktiviert wird.

14. Verfahren nach Anspruch 11, dadurch gekennzeichnet, daß sich durch Taupunktserniedrigung aus dem Reaktionsgas als Bindemittel auf dem Kunststoffträger bzw. dem Kunststoffmaterial ein $H_2SO_4$-haltiger Niederschlag bildet.

15. Verfahren zur erneuten Beschichtung eines Katalysatortägers nach einem der vorhergehenden Ansprüche, dadurch gekennzeichnet, daß unbrauchbar gewordenes Katalysatormaterial mittels eines Lösungsfluids und/oder mechanischer Erschütterungen und gegebenenfalls eines magnetischen oder elektrostatischen Feldes von dem Katalysatorträger gelöst und abgetragen wird und danach frisches Katalysatormaterial auf der Katalysatorträger niedergeschlagen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 242 488 (MITSUBISHI) --- | | B 01 D 53/36 B 01 J 37/00 |
| A | EP-A-0 229 229 (DIDIER-WERKE) --- | | |
| A | EP-A-0 262 311 (DIDIER-WERKE) ----- | | |
| | | | **RECHERCHIERTE SACHGEBIETE (Int. Cl.5)** |
| | | | B 01 D B 01 J |

Der vorliegende Recherchenbericht wurde für alle Patentansprüche erstellt

| Recherchenort | Abschlußdatum der Recherche | Prüfer |
|---|---|---|
| DEN HAAG | 10-11-1989 | BOGAERTS M.L.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)